# EUROPÄISCHE PATENTANMELDUNG

(11) **EP 1 132 345 A1**
(43) Veröffentlichungstag der Anmeldung: **12.09.2001**
(21) Anmeldenummer: 00104992.3
(22) Anmeldetag: 09.03.2000
(51) Int. Cl.: C02F 1/36, C02F 3/12, C02F 3/30, C02F 11/00

(54) **Biologische Kläranlage sowie Verfahren zur Reinigung von Abwasser in einer biologischen Kläranlage**

(71) Anmelder: Tesser, Kurt, Ing., 83043 Bad Aibling (DE); OSSWALD, Gerhard, 80805 Munchen (DE); Schulz, Wolfgang, Prof. Dr.-Ing., 86161 Augsburg (DE)
(72) Erfinder: Tesser, Kurt, Ing., 83043 Bad Aibling (DE); OSSWALD, Gerhard, 80805 Munchen (DE); Schulz, Wolfgang, Prof. Dr.-Ing., 86161 Augsburg (DE)
(74) Vertreter: Flosdorff, Jürgen, Dr.

(57) **Zusammenfassung**

Bei dem erfindungsgemäßen Verfahren wird der Belebtschlamm und/oder der Faulschlamm in einen Rezirkulationskreislauf im kontinuierlichen Durchfluß der Schlammflüssigkeit mit Ultraschall behandelt. Hierdurch wird die Anzahl Stoffwechsel-aktiver Mikroorganismen durch Aufbrechen großer Schlammflocken mit der Folge einer größeren aktiven Oberfläche vergrößert und ein Teil der Mikroorganismen abgetötet, die von den Stoffwechsel-aktiven Mikroorganismen biologisch abgebaut werden. Der Rezirkulationskreislauf führt in der Belebungsstufe wieder zum Belebungsbecken und im Stabilisierungskreislauf in den Faulbehälter zurück. Die zu entsorgende Schlammmenge wird um 30% reduziert und die Reinigungswirkung des Wassers verbessert. Belebungsbecken und Faulbehälter können kleiner ausgebildet werden.

## Beschreibung

Die Erfindung betrifft eine biologische Kläranlage gemäß dem Oberbegriff der Patentansprüche 1 und 2 sowie ein Verfahren zur Reinigung von Abwasser in einer biologischen Kläranlage, bei dem der Belebschlamm und/oder der Faulschlamm mit Ultraschall behandelt wird.

In biologischen Kläranlagen entstehen bei der Abwassereinigung durch Absetzvorgänge in Vorklärbecken sogenannte Primärschlämme und durch von Bakterien und anderen Mikroorganismen hervorgerufene Stoffwechselvorgänge biologisch abbaubarer Stoffe biologische Schlämme, die auch als Sekundärschlämme bezeichnet werden. Die letztgenannten Schlämme fallen in aeroben, anoxischen und unaeoben Prozeßreaktionen wie Belebungsbecken und Faulbehältern an.

Diese biologischen Prozesse laufen langsam ab und erfordern bisher ein verhältnismäßig großes Belebungsbecken und -falls die Kläranlage damit ausgerüstet ist- einen großen Faulbehälter. Obwohl die Mikroorganismen die Schlämme teilweise in Biogase umwandeln, verbleibt ein großes Restschlammvolumen, das als Klärschlamm entsorgt wird und hierbei beträchtliche Kosten verursacht. Die erzielbaren Reinheitsgrade der Abwasserreinigung sind bei den bisher bekannten Abwasserreinigungsverfahren zudem unbefriedigend.

Um hier Abhilfe zu schaffen, ist bereits vorgeschlagen worden, einen Teil des Belebtschlammes unter gleichzeitiger Belüftung in Intervallen oder den Sekundärschlamm mit Ultraschall zu behandeln, und zwar in der Weise, daß hierbei die Mikroorganismen durch hohen Energieeinsatz für die Ultraschallerzeugung zerstört werden, wobei die freigesetzten Zellbestandteile der abgetöteten Mikroorganismen als zusätzlicher Nährstoff für die im Belegungsbecken wirksamen lebenden Mikroorganismen dient. Hierdurch läßt sich zwar das Volumen des zu entsorgenden Überschußschlamms reduzieren, jedoch ist der Energieeinsatz so groß, daß dieses Verfahren unwirtschaftlich ist.

Der vorliegenden Erfindung liegt die Aufgabe zugrunde, eine biologische Kläranlage sowie ein Verfahren zur Reinigung von Abwasser in einer solchen biologischen Kläranlage anzugeben, mit der bzw. mit dem der zu entsorgende Schlamm auf wirtschaftliche Weise verringert und der Reinigungsgrad des Wassers verbessert wird. Außerdem soll das Reaktionsvolumen und die damit verbundenen Baukosten verringert werden.

Diese Aufgaben werden erfindungsgemäß durch die Merkmale der Patentansprüche 1 bis 3 gelöst.

Vorteilhafte Ausgestaltungen der Erfindung sind in den abhängigen Ansprüchen gekennzeichnet.

Bei dem erfindungsgemäßen Verfahren wird der Belebtschlamm und/oder der Faulschlamm in wenigstens einem Rezirkulationskreislauf im kontinuierlichen Durchfluß der Schlammflüssigkeit einer Ultraschallbehandlung unterworfen, bei der die gesamte Schlammmmenge des Belebungsbecken und/oder des Faulbehälters mit einem verhältnismäßig geringen Energieeintrag beschallt wird. Die Ultraschallbehandlung erfolgt bevorzugt mit einem Energieeinsatz von unter 600 Watt x h/kg Trockensubstanz in der Schlam mflüssigkeit in einem Frequenzbereich von 15 bis 150 KHz bei einer Schallintensität von 0,2 bis 1 Watt/cm² in einer Beschallungszeit von unter 300 s. Hierdurch werden die MikroorganismenFlocken oder -Agglomerate aufgelöst, so daß die im Inneren der Flocken bzw. Agglomerate befindlichen Organismen freigesetzt werden und aktiv an dem biologischen Abbauprozeß teilnehmen. Ein Teil der Mikroorganismen wird durch die Ultraschalleinwirkung abgetötet, und von den freigesetzten lebenden Mikroorganismen biologisch abgebaut.

Bevorzugt ist vorgesehen, daß wenigstens 25% der Trockensubstanz der Belebungsstufe und/oder des Faulbehälters innerhalb von 24 Stunden beschallt wird. Die gesamte Trockensubstanz der Belebungsstufe und/oder des Faulbehälters sollte in maximal 2,5 Tagen beschallt werden.

Durch das erfindungsgemäße Verfahren läßt sich der zu entsorgende Schlamm um ca. 30% reduzieren, wodurch die Schlammentsorgungskosten erheblich verringert sind. Außerdem wird eine verbesserte Reinigungswirkung des Wassers erzielt.

Die erfindungsgemäße biologische Kläranlage hat einen Rezirkulationskreislauf, in dem der Rücklaufschlamm nach Durchlaufen des Nachklärbeckens wieder der Belebungsstufe zugeführt wird, und einen Ultraschallreaktor, der in dem Rezirkulationskreislauf angeordnet ist und kontinuierlich die zurückgeführte Rücklaufschlammflüssigkeit beschallt. Wenn -wie dies oft der Fall ist- die biologische Kläranlage mit einem Faulbehälter ausgerüstet ist, kann zusätzlich oder alternativ in diesem Bereich der sogenannten Schlammstabilisierung ein Rezirkulationskreislauf vorgesehen sein, in dem der Faulschlamm von dem Ablauf des Faulbehälters zu dessen Zulauf zurückgeführt und hierbei von einem Ultraschallreaktor beschallt wird, der in dem Rezirkulationskreislauf angeordnet ist.

Durch die Reduzierung des zu entsorgenden Schlamms und durch die verbesserte Reinigungswirkung kann die erfindungsgemäße Kläranlage ein kleineres Belebungsbecken und gegebenenfalls einen kleineren Faulbehälter haben, als dies beim Stand der Technik der Fall ist.

Die Erfindung sieht demnach vor, daß das gesamte biologische Prozeßvolumen der Belebungsstufe und/oder der Stabilisierungs/ Faulbehälterstufe kontinuierlich in bevorzugt maximal 2,5 Tagen energiearm beschallt wird, wodurch das erfindungsgemäße Verfahren wirtschaftlicher ist als die bisher üblichen Vorgehensweisen. Einem verhältnismäßig kleinen Energieaufwand stehen beträchtliche Einsparungen bei der Entsorgung des Überschußschlamms und geringere Baukosten des Belebungsbeckens und gegebenenfalls Faulbehälter gegenüber, wobei zudem der Reinigungsgrad des Wassers verbessert ist. Wesentlich ist hierbei die erhebliche Vergrößerung der Anzahl der aktiven Mikroorganismen durch eine schonende Desintegration der Schlammflocken-Agglomerate, wobei nur ein Teil der Mikroorganismen zerstört wird und von den nun hochaktiven anderen Mikroorganismen umgehend verstoffwechselt wird.

Die Erfindung wird nachfolgend anhand dreier Ausführungsbeispiele mit Bezug auf die Zeichnung kurz beschrieben. Dabei zeigen auf rein schematische Weise:
- Fig. 1: eine erste Ausführungsform der Ultraschallbehandlung von biologischen Schlämmen;
- Fig. 2: eine modifizierte Ausführungsform der Ultraschallbehandlung von biologischen Schlämmen und
- Fig. 3: eine zweite Ausführungsform der Erfindung.

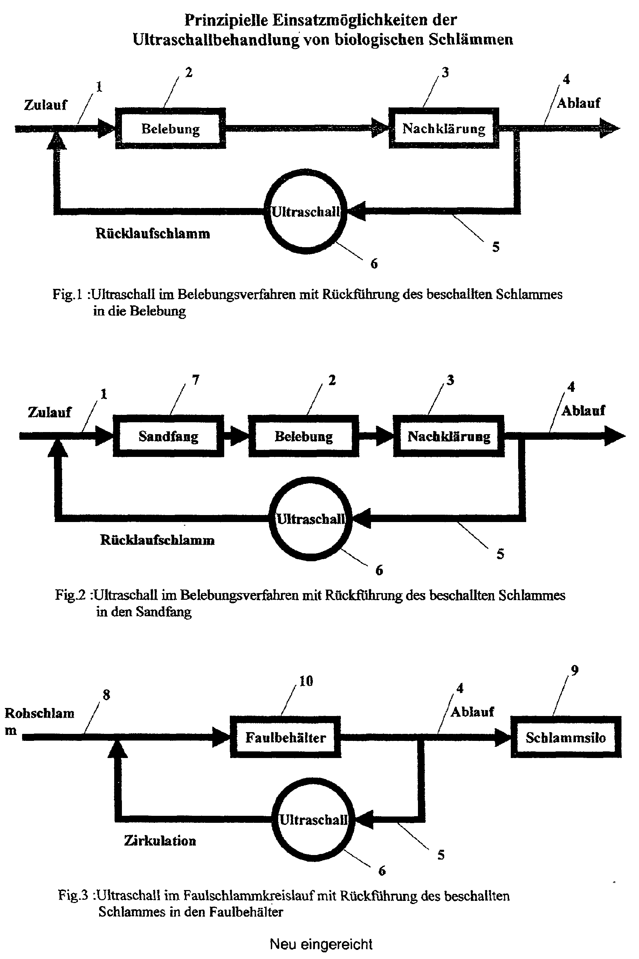

Fig. 1 zeigt in einer schematischen Darstellung einen Zulauf 1 zu einem Belebungsbecken 2 mit einem nachfolgenden Nachklärbecken 3.

Von dem Ablauf 4 aus dem Nachklärbecken 3 führt eine Rezirkulationsleitung 5 zum Zulauf 1 des Belebungsbeckens 2 zurück. In der Rezirkulationsleitung 5 ist ein Ultraschallreaktor 6 angeordnet, der kontinuierlich von der Rücklaufschlammflüssigkeit durchströmt wird. Das gesamte Prozeßvolumen durchströmt dabei mindestens einmal den Ultraschallreaktor 6, bevor das gereinigte Wasser und der Überschußschlamm abgeführt werden.

Bei der modifizierten Ausführungsform gemäß Fig. 2 ist dem Belebungsbecken 2 ein Sandfang 7 vorgeschaltet. Die Rücklaufschlammflüssigkeit strömt in der Rezirkulationsleitung 5 nach Durchlaufen des Ultraschallreaktors 6 zurück in den Zulauf 1.

Fig. 3 zeigt einen Faulschlammkreislauf mit Rückführung des beschallten Schlammes in den Faulbehälter 10. Die Rezirkulationsleitung 5 führt von dem Ablauf 4 in den Rohschlamm-Zulauf 8 zurück, wobei auch hier der gesamte Faulschlamm mindestens einmal den Ultraschallreaktor 6 durchströmt. Der Ablauf 4 führt in einen Schlammsilo 9.

## Patentansprüche

1. Biologische Kläranlage, mit einem Belebungsbecken (2) und einem Nachklärbecken (3),
**gekennzeichnet durch**
einen Rezirkulationskreislauf (5), in dem der Rücklaufschlamm wieder der Belebungsstufe zugeführt wird, und einen Ultraschallreaktor (6), der in dem Rezirkulationskreislauf (5) angeordnet ist.

2. Biologische Kläranlage mit einem Faulbehälter,
**gekennzeichnet durch** einen Rezirkulationskreislauf (5), in dem Faulschlamm von dem Ablauf (4) des Faulbehälters (7) zu dessen Zulauf (8) zurückgeführt wird, und einen Ultraschallreaktor (6), der in dem Rezirkulationskreislauf (5) angeordnet ist.

3. Verfahren zur Reinigung von Abwasser in einer biologischen Kläranlage, mit Ultraschallbehandlung des Belebtschlamms und/ oder des Faulschlamms,
**dadurch gekennzeichnet**, daß die Ultraschallbehandlung in wenigstens einem Rezirkulationskreislauf (5) im kontinuierlichen Durchfluß der Schlammflüssigkeit erfolgt.

4. Verfahren nach Anspruch 3,
**dadurch gekennzeichnet**, daß mindestens 25% der Trockensubstanz der Belebungsstufe innerhalb von 24 Stunden beschallt wird.

5. Verfahren nach Anspruch 3 oder 4,
**dadurch gekennzeichnet**, daß die gesamte Trockensubstanz in maximal 2,5 Tagen beschallt wird.

6. Verfahren nach einem der Ansprüche 3 bis 5,
**dadurch gekennzeichnet**, daß die beschallte Belebtschlammflüssigkeit in den Abwasserzulauf (1), in einen Sandfang (7) oder in ein Belebungsbecken eingeleitet wird.

7. Verfahren nach einem der Ansprüche 3 bis 6,
**dadurch gekennzeichnet**, daß in der Schlammstabilisierungsstufe der Faulschlamm als Umwälzschlamm beschallt wird.

8. Verfahren nach einem der Ansprüche 3 bis 7,
**dadurch gekennzeichnet**, daß mindestens 25% der Trockensubstanz der Stabilisierungsstufe innerhalb von 24 Stunden beschallt wird.

9. Verfahren nach einem der Ansprüche 3 bis 8,
**dadurch gekennzeichnet**, daß das gesamte Stabilisierungsvolumen in maximal 2,5 Tagen beschallt wird.

10. Verfahren nach einem der Ansprüche 3 bis 9,
**dadurch gekennzeichnet**, daß der Energieeintrag ≤ 600 Watt x h/kg Tockensubstanz beträgt.

11. Verfahren nach einem der Ansprüche 3 bis 10,
**dadurch gekennzeichnet**, daß die Beschallung in einem Frequenzbereich von 15 bis 150 KHz bei einer Schallintensität von 0,2 bis 1 W/cm² liegt.

12. Verfahren nach einem der Ansprüche 3 bis 11,
**dadurch gekennzeichnet**, daß die Beschallungszeit < 300 s ist.
